# EUROPEAN PATENT SPECIFICATION

(11) **EP 3 318 951 B1**
(45) Date of publication and mention of the grant of the patent: **06.11.2019**
(21) Application number: 17191449.2
(22) Date of filing: 15.09.2017
(51) Int. Cl.: G01D 5/14, G05G 1/08

(54) **ROTATIONAL INPUT DEVICE**
DREHEINGABEVORRICHTUNG
DISPOSITIF D'ENTRÉE ROTATIF

(30) Priority: 21.09.2016 JP 2016183780
(43) Date of publication of application: 09.05.2018
(73) Proprietor: Alps Alpine Co., Ltd., Tokyo 145-8501 (JP)
(72) Inventor: WAKITA, Yoshitsugu, Ota-ku, Tokyo 145-8501 (JP)
(74) Representative: Schmitt-Nilson Schraud Waibel Wohlfrom Patentanwälte Partnerschaft mbB

(56) References cited:
- EP-A1- 2 902 878
- EP-A2- 1 065 473
- JP-A- 2012 079 295

## Description

### BACKGROUND OF THE INVENTION

### 1. Field of the Invention

The present invention relates to rotational input devices, and in particular, relates to a rotational input device that detects an angle of rotation by using a magnetic substance and a magnetic sensor.

### 2. Description of the Related Art

Rotational input devices detecting an angle of rotation by using a magnetic substance and a magnetic sensor have been developed for, for example, in-vehicle apparatuses. Such a rotational input device includes an operation knob. An operator can properly operate an in-vehicle apparatus by rotating the operation knob.

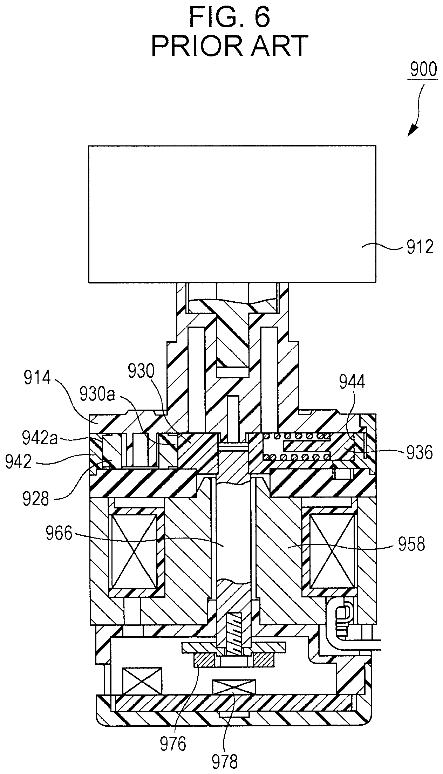

Both Japanese Unexamined Patent Application Publication No. 2012-079295 and the European patent application EP2902878 A1 disclose a rotational input device with such a configuration. The rotational input device, indicated at 900, will now be described with reference to Fig. 6.

In the rotational input device 900, an operation knob 912 is connected to a planetary carrier 914, which rotatably supports a planetary gear 928. The planetary gear 928 meshes with an outer toothed portion 930a of a sun gear 930 to which an output shaft 966 is secured, and also meshes with an inner toothed portion 942a of an outer gear 942. A plunger 936 provided for the sun gear 930 is in elastic contact with a recess cam portion 944 of the outer gear 942. A solenoid unit 958 prevents rotation of the outer gear 942 in accordance with an output of a magnetic sensor 978 facing a magnet 976 attached to the output shaft 966.

Such a configuration enables reliable detection of a small angle of rotation of a rotatable operation member rotated in an opposite direction beyond its operation range.

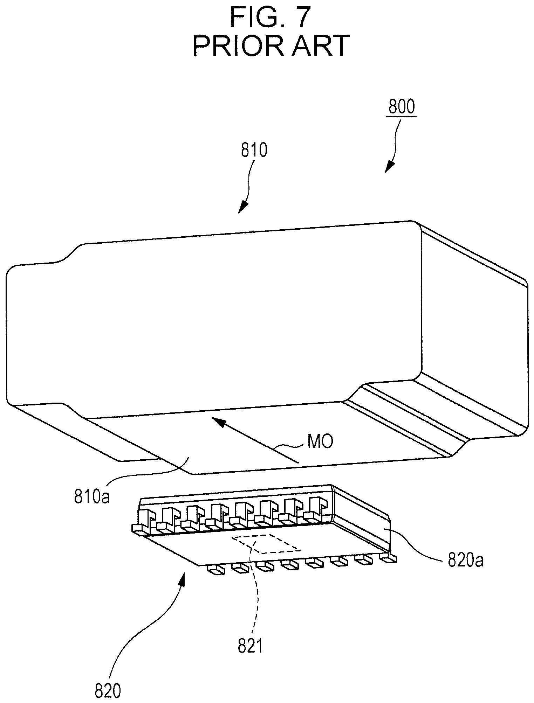

The rotational input device 900 includes the sensor element and the magnetic substance for detection of an angle of rotation (hereinafter, also referred to as a "rotation angle") of the operation knob. For arrangement of such a sensor element and such a magnetic substance, a rotation detection unit 800 may have a structure as illustrated in Fig. 7.

The rotation detection unit 800 includes a sensor element 820 and a magnetic substance 810. The sensor element 820 and the magnetic substance 810 are spaced from each other. The sensor element 820 is disposed on an insulating substrate (not illustrated). The magnetic substance 810 has a flat and wide bottom surface 810a disposed in plane-parallel face-to-face relationship with an upper surface of the sensor element 820. The magnetic substance 810 is magnetized in a magnetization direction M0. The sensor element 820 includes a sensor element body 820a and a detection mechanism 821 disposed at substantially the center of the sensor element body 820a. The detection mechanism 821 can detect a rotation angle of the magnetic substance 810 in response to a rotation of the magnetic substance 810.

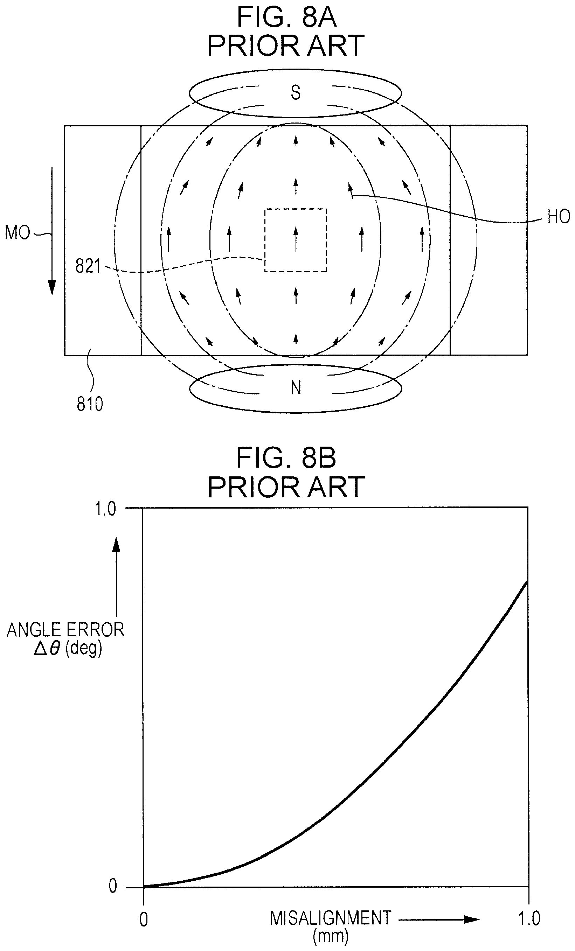

In the structure of the rotation detection unit 800, a vector distribution of magnetic field lines H0 appears around the magnetic substance 810 as illustrated in Fig. 8A. In the vector distribution of the magnetic field lines H0, the magnetic field lines H0 from the north magnetic pole to the south magnetic pole are directed straight in central part, corresponding to the location of the detection mechanism 821, of the magnetic substance 810 along the width of the magnetic substance 810. As the magnetic field lines H0 are farther away from the central part, the orientations of the magnetic field lines are more inclined. In other words, a barrel-shaped distortion occurs along the magnetic field lines H0.

The sensor element 820 may be misaligned relative to the magnetic substance 810. Misalignment results from, for example, an installation error caused at installation of the sensor element 820 on the insulating substrate. If the sensor element 820 is misaligned relative to the magnetic substance 810, a barrel-shaped distortion along the magnetic field lines H0 will cause a rotation angle of the magnetic substance 810 detected by the detection mechanism 821 to include an angle error Δθ. The angle error Δθ is proportional to the magnitude of misalignment. Disadvantageously, as the misalignment of the sensor element 820 relative to the magnetic substance 810 increases, the angle error Δθ also increases, as illustrated in Fig. 8B.

### SUMMARY OF THE INVENTION

The present invention has been made in view of the above-described circumstances in the art and provides a rotational input device in which if a sensor element is misaligned relative to a magnetic substance, an angle error will be less likely to occur.

An aspect of the present invention provides a rotational input device including an insulating substrate, a sensor element disposed on the insulating substrate, and a magnetic substance spaced close to the sensor element. The sensor element includes a detection mechanism configured to detect orientations of magnetic field lines around the sensor element and has a sensor element parallel surface facing the magnetic substance. The magnetic substance has a bottom surface that is located adjacent to the sensor element so as to face the sensor element parallel surface, and includes two ridges that protrude from the bottom surface toward the sensor element and extend parallel to each other. The two ridges each have a ridge parallel surface located adjacent to the sensor element such that the ridge parallel surface is substantially parallel to the sensor element parallel surface. The ridge parallel surface has a substantially rectangular shape in plan view. The magnetic substance is magnetized in a magnetization direction identical to a longitudinal direction of the ridges.

Since the rotational input device with such a configuration includes the two ridges extending in the same direction as the magnetization direction of the magnetic substance, distortions of the magnetic field lines emanating from the two ridges cancel one another in a region between the two ridges. Thus, the magnetic field lines emanating from the entire magnetic substance extend in the magnetization direction of the magnetic substance in this region. Consequently, an angle error is less likely to occur if the sensor element is misaligned relative to the magnetic substance.

In this aspect, preferably, the two ridges are arranged at a distance from each other and the distance is greater than a width of the detection mechanism in a direction orthogonal to the longitudinal direction of the ridges.

In this configuration, since the distance between the two ridges is set greater than the width of the detection mechanism, a wide region in which the magnetic field lines extend in the magnetization direction of the magnetic substance can be set.

In this aspect, the two ridges may be arranged symmetrically in a direction orthogonal to the longitudinal direction of the ridges.

In this configuration, the symmetrical arrangement of the two ridges enables distortions of the magnetic field lines emanating from the two ridges to precisely cancel one another if a misalignment of the sensor element relative to the magnetic substance occurs either to the right or to the left of the detection mechanism.

Since the rotational input device according to the present invention includes the two ridges extending in the same direction as the magnetization direction of the magnetic substance, the distortions of the magnetic field lines emanating from the two ridges cancel one another in the region between the two ridges. Thus, the magnetic field lines emanating from the entire magnetic substance extend in the magnetization direction of the magnetic substance in the region. Consequently, if the sensor element is misaligned relative to the magnetic substance, an angle error will be less likely to occur.

### BRIEF DESCRIPTION OF THE DRAWINGS

Fig. 1 is a perspective view of a rotational input device according to an embodiment of the present invention;
Fig. 2 is a perspective view of a rotation detection unit in the rotational input device as viewed from below;
Fig. 3 is a bottom plan view of the rotation detection unit;
Fig. 4 is a front schematic view illustrating the rotation detection unit and an operation knob;
Fig. 5A is a schematic diagram illustrating magnetic field lines in the rotation detection unit;
Fig. 5B is a graph illustrating the relationship between an angle error and a misalignment;
Fig. 6 is a longitudinal sectional view of a related-art rotational input device;
Fig. 7 is a perspective view of a rotation detection unit in the related-art rotational input device as viewed from below;
Fig. 8A is a schematic diagram illustrating magnetic field lines in the rotation detection unit in the related-art rotational input device; and
Fig. 8B is a graph illustrating the relationship between an angle error and a misalignment.

### DESCRIPTION OF THE PREFERRED EMBODIMENTS

A rotational input device according to the present invention will be described below with reference to the drawings. A rotational input device 100 according to an embodiment is used as an input operation mechanism for an input operation of an electronic apparatus or a vehicle. For example, an input operation can be performed by rotating an operation knob. An input depends on a rotation angle of the operation knob relative to a predetermined position, so that different inputs can be achieved. Applications of the rotational input device 100 are not limited to those described in the following embodiments, and can be modified as appropriate. As used herein and in the figures, unless otherwise noted, the term "+X" direction refers to a rightward direction, the term "-X" direction refers to a leftward direction, the term "+Y" direction refers to a direction into the plane of the page, the term "-Y" direction refers to a direction out of the plane of the page, the term "+Z" direction refers to an upward direction, and the term "-Z" direction refers to a downward direction.

### Embodiments

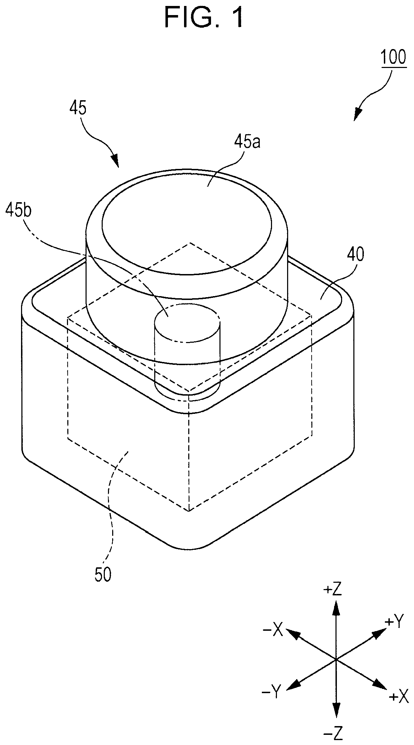

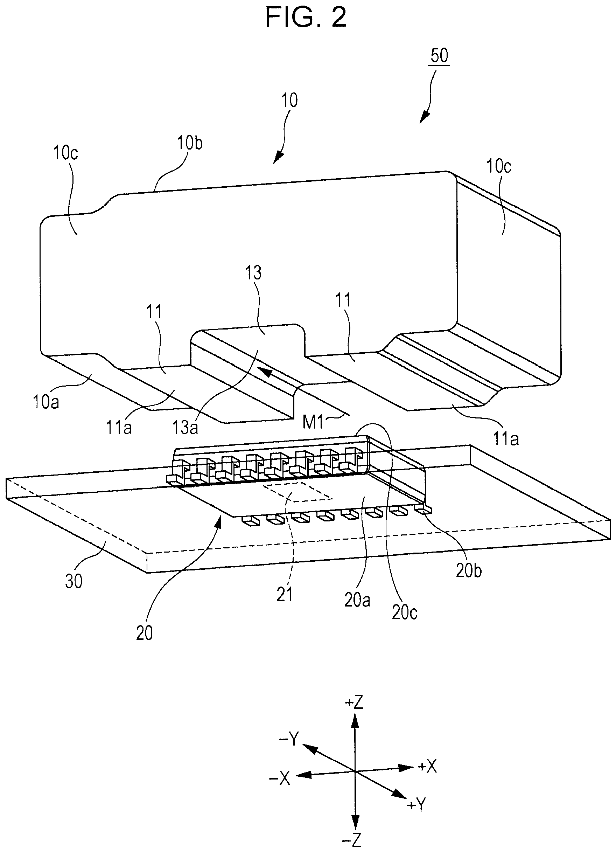

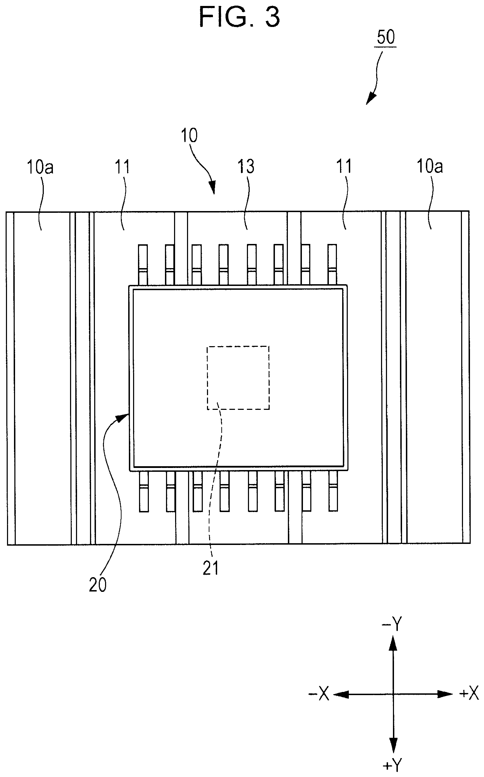

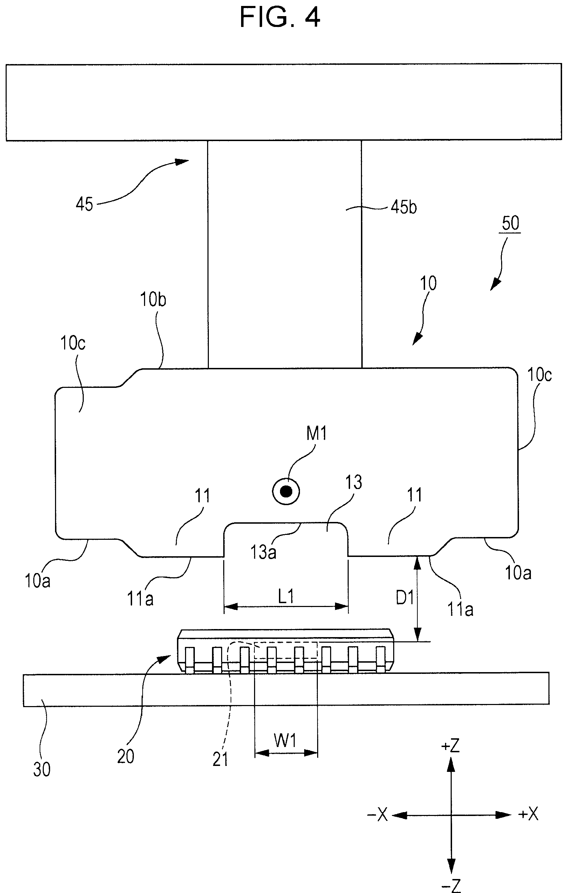

The structure of the rotational input device 100 according to the embodiment of the present invention will be described with reference to Figs. 1 to 4. Fig. 1 is a perspective view of the rotational input device 100. Fig. 2 is a perspective view of a rotation detection unit 50 in the rotational input device 100 as viewed from below. Fig. 3 is a bottom plan view of the rotation detection unit 50. Fig. 4 is a front schematic view illustrating the rotation detection unit 50 and an operation knob 45. In Fig. 2, an insulating substrate 30 is illustrated as being transparent for easy viewing of a sensor element 20.

As illustrated in Fig. 1, the rotational input device 100 includes a substantially rectangular case 40, the operation knob 45 rotatably attached to the case 40, and the rotation detection unit 50 accommodated in the case 40. The rotation detection unit 50 detects a rotation angle of the operation knob 45. The rotational input device 100 outputs information indicating the rotation angle detected by the rotation detection unit 50 to, for example, the electronic apparatus. The rotation detection unit 50 may detect, for example, a rotation direction and a rotation speed in addition to a rotation angle.

The operation knob 45 includes an operation portion 45a protruding upwardly (in the +Z direction) through an opening of the case 40 and a shaft 45b extending downwardly (in the -Z direction) from the operation portion 45a and coupled to the rotation detection unit 50.

As illustrated in Fig. 2, the rotation detection unit 50 includes the insulating substrate 30, the sensor element 20 disposed on the insulating substrate 30, and a magnetic substance 10 spaced close to the sensor element 20.

The insulating substrate 30 is attached horizontally in the case 40. The insulating substrate 30 includes wiring lines (not illustrated) through which an output signal of the sensor element 20 is transmitted to the outside of the case 40. The shaft 45b of the above-described operation knob 45 is disposed perpendicular to the surface of the insulating substrate 30.

The sensor element 20 includes a sensor element body 20a and a plurality of terminals 20b arranged on the sensor element body 20a. The sensor element 20 further includes a detection mechanism 21 disposed in the sensor element body 20a. The detection mechanism 21 detects orientations of magnetic field lines around the sensor element 20. The sensor element 20 (sensor element body 20a) has a sensor element parallel surface 20c facing the magnetic substance 10. The terminals 20b are arranged to output a signal detected by the detection mechanism 21 to, for example, the external electronic apparatus. The sensor element body 20a is made of synthetic resin. The above-described detection mechanism 21 is embedded in the sensor element body 20a.

As illustrated in Fig. 3, the detection mechanism 21 has a substantially square shape in plan view. The detection mechanism 21 is disposed in substantially central part of the sensor element 20. Furthermore, as illustrated in Fig. 4, the detection mechanism 21 is disposed in the sensor element 20 such that the detection mechanism 21 is parallel to a surface of the insulating substrate 30. The detection mechanism 21 has a width W1 in the rightward or leftward direction, or lateral direction. The center of the detection mechanism 21 coincides with an extension of the axis of the shaft 45b.

As illustrated in Figs. 2 and 4, the magnetic substance 10 is spaced close to the above-described sensor element 20. The magnetic substance 10 has a bottom surface 10a located adjacent to the sensor element 20 such that the bottom surface 10a faces the sensor element parallel surface 20c, an upper surface 10b including flat portions opposite the bottom surface 10a, and a plurality of side surfaces 10c including flat portions perpendicular to the bottom surface 10a. The magnetic substance 10 has a rectangular shape in plan view and is substantially rectangular-parallelepiped. The magnetic substance 10 is magnetized in a magnetization direction M1, that is, in the direction out of the plane of the page of each of Figs. 2 and 4. In the embodiment, the magnetic substance 10 is a permanent magnet.

The magnetic substance 10 further includes two ridges 11 protruding from the bottom surface 10a toward the sensor element 20 and extending parallel to each other. The two ridges 11 are arranged parallel to each other such that the ridges are symmetric about the extension of the axis of the shaft 45b. In other words, the ridges 11 are arranged parallel to each other symmetrically about a rotation axis of the magnetic substance 10 to be rotated in response to a rotation of the operation knob 45.

The two ridges 11 each have a ridge parallel surface 11a substantially parallel to the sensor element parallel surface 20c of the sensor element 20. The ridge parallel surface 11a has a rectangular shape in plan view. The ridge parallel surface 11a faces the insulating substrate 30 and the sensor element parallel surface 20c of the sensor element 20. In other words, the magnetization direction M1 of the magnetic substance 10 is identical to the longitudinal direction of the ridges 11. The ridges 11 extend in such a manner that the longitudinal direction of the ridges is orthogonal to the rotation axis of the magnetic substance 10 so that the magnetization direction M1 is orthogonal to the rotation axis of the magnetic substance 10. The two ridges 11 define a groove 13 therebetween. The groove 13 has a groove parallel surface 13a, which faces the detection mechanism 21 of the sensor element 20.

As illustrated in Fig. 4, the groove 13 has a width providing a predetermined distance L1 in the lateral direction. In other words, the ridges 11 are spaced the predetermined distance L1 from each other. The predetermined distance L1 between the two ridges 11 is set greater than the width W1 of the detection mechanism 21. In other words, the width W1 of the detection mechanism 21 is within the predetermined distance L1 provided by the groove 13 in the lateral direction. Furthermore, the ridge parallel surface 11a of each ridge 11 and the detection mechanism 21 in the sensor element 20 are spaced a predetermined distance D1 from each other.

In the rotation detection unit 50 of the rotational input device 100, the shaft 45b of the above-described operation knob 45 is coupled to the magnetic substance 10. The magnetic substance 10 is rotatably held in the case 40 (refer to Fig. 1). The magnetic substance 10 is rotated in conjunction with the operation knob 45 such that a rotation angle of the magnetic substance 10 depends on an operation angle of the operation knob 45.

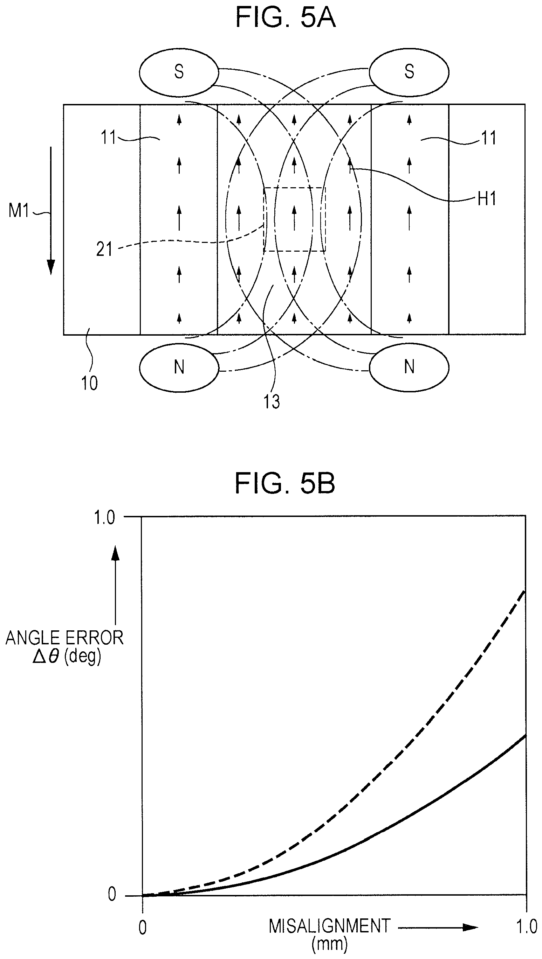

An operation of the rotational input device 100 according to the embodiment of the present invention will now be described with reference to Figs. 5A and 5B. Fig. 5A is a schematic diagram illustrating magnetic field lines H1 in the rotation detection unit 50. Fig. 5B is a graph illustrating the angle error Δθ, indicated by a solid line, plotted against a misalignment of the sensor element 20. In Fig. 5B, a broken line indicates the angle error Δθ in the above-described related-art rotation detection unit 800 for comparison.

As illustrated in Fig. 5A, vector distributions of the magnetic field lines H1 appear around the magnetic substance 10. In the rotation detection unit 50, the two ridges 11 work like individual magnets. The vector distributions of the magnetic field lines H1 correspond to the two ridges 11. Specifically, the magnetic field line H1 on a line connecting the centers of the north and south magnetic poles of each of the two ridges 11 is directed straight. As the magnetic field lines H1 are farther away from the line connecting the centers, the magnetic field lines H1 curve more as indicated by alternate long and short dashed lines in Fig. 5A.

For example, the magnetic field lines H1 emanating from the right ridge 11 in Fig. 5A would curve to the left in a region between the two ridges 11, namely, in the region corresponding to the groove 13. The magnetic field lines H1 emanating from the left ridge 11 would curve to the right in the region corresponding to the groove 13. However, the symmetrical parallel arrangement of the two ridges 11 protruding from the magnetic substance 10 causes the opposing magnetic field lines H1 in the groove 13 to cancel one another, thus changing the distributions of magnetic field lines. Specifically, the magnetic field lines H1 are directed straight at any depth in the groove 13 as indicated by full-line arrows in Fig. 5A. In other words, the magnetic field lines emanating from the magnetic substance 10 include a layer of widely distributed magnetic field lines H1 parallel to one another in the region between the two ridges 11 in which the orientations of the parallel magnetic field lines H1 are hardly distorted. In the embodiment, this layer is aligned with the detection mechanism 21.

Consequently, if the sensor element 20 is misaligned relative to the magnetic substance 10, an angle error Δθ included in a rotation angle of the magnetic substance 10 detected by the detection mechanism 21 is less than an angle error Δθ in the related-art rotation detection unit 800, as illustrated in Fig. 5B. Fig. 5B demonstrates that the angle error Δθ in the embodiment is substantially half that in the related art.

The predetermined distance L1 between the two ridges 11 and the predetermined distance D1 between the ridge parallel surfaces 11a of the ridges 11 and the detection mechanism 21 in the sensor element 20 are set in consideration of the dimensions of the magnetic substance 10 and the detection mechanism 21 such that the angle error Δθ is minimized.

Advantages of the embodiment will now be described.

Since the rotational input device 100 includes the two ridges 11 extending in the same direction as the magnetization direction M1 of the magnetic substance 10, the distortions of the magnetic field lines H1 emanating from the two ridges 11 cancel one another in the region between the two ridges 11. Thus, the magnetic field lines H1 emanating from the entire magnetic substance 10 extend in the magnetization direction M1 of the magnetic substance 10 in this region. Consequently, if the sensor element 20 is misaligned relative to the magnetic substance 10, an angle error Δθ will be less likely to occur.

In addition, since the distance L1 between the two ridges 11 is set greater than the width W1 of the detection mechanism 21, a wide region in which the magnetic field lines H1 extend in the magnetization direction M1 of the magnetic substance 10 can be set.

In addition, the symmetrical arrangement of the two ridges 11 enables the distortions of the magnetic field lines H1 emanating from the two ridges 11 to precisely cancel one another if a misalignment of the sensor element 20 relative to the magnetic substance 10 occurs either to the right or to the left of the detection mechanism 21.

As described above, since the rotational input device according to the present invention includes the two ridges extending in the same direction as the magnetization direction of the magnetic substance, the distortions of the magnetic field lines emanating from the two ridges cancel one another in the region between the two ridges. Thus, the magnetic field lines emanating from the entire magnetic substance extend in the magnetization direction of the magnetic substance in this region. Consequently, if the sensor element is misaligned relative to the magnetic substance, an angle error will be less likely to occur.

The present invention is not limited to the above-described embodiments and can be variously modified and practiced without departing from the scope of the invention as defined by the appended claims.

## Claims

1. A rotational input device (100) comprising:
an insulating substrate (30);
a sensor element (20) disposed on the insulating substrate; and
a magnetic substance (10) spaced close to the sensor element,
the sensor element including a detection mechanism (21) configured to detect orientations of magnetic field lines (H1) around the sensor element and having a sensor element parallel surface (20c) facing the magnetic substance,
the magnetic substance having a bottom surface (10a) that is located adjacent to the sensor element so as to face the sensor element parallel surface **characterized in that** the magnetic substance includes two ridges (11) that protrude from the bottom surface toward the sensor element and extend parallel to each other,
the two ridges each having a ridge parallel surface located adjacent to the sensor element such that the ridge parallel surface is substantially parallel to the sensor element parallel surface, the ridge parallel surface having a substantially rectangular shape in plan view,
the magnetic substance being magnetized in a magnetization direction (M1) identical to a longitudinal direction of the ridges.

2. The device according to Claim 1, wherein the two ridges are arranged at a distance (L1) from each other and the distance is greater than a width (W1) of the detection mechanism in a direction orthogonal to the longitudinal direction of the ridges.

3. The device according to Claim 1 or 2, wherein the two ridges are arranged symmetrically in a direction orthogonal to the longitudinal direction of the ridges.

## Patentansprüche

1. Dreheingabevorrichtung (100), aufweisend:
ein isolierendes Substrat (30);
ein Sensorelement (20), das auf dem isolierenden Substrat angeordnet ist; und
eine magnetische Substanz (10), die in geringem Abstand von dem Sensorelement angeordnet ist,
wobei das Sensorelement einen Erfassungsmechanismus (21) aufweist, der zum Erfassen von Ausrichtungen von Magnetfeldlinien (H1) um das Sensorelement herum ausgebildet ist und eine zu dem Sensorelement parallele Fläche (20c) aufweist, die der magnetischen Substanz zugewandt ist,
wobei die magnetische Substanz eine Bodenfläche (10a) aufweist, die dem Sensorelement benachbart derart angeordnet ist, dass sie der zu dem Sensorelement parallelen Fläche zugewandt ist,
**dadurch gekennzeichnet, dass** die magnetische Substanz zwei Stege (11) aufweist, die von der Bodenfläche in Richtung auf das Sensorelement vorstehen und sich parallel zueinander erstrecken,
wobei die beiden Stege jeweils eine zu dem Steg parallele Fläche aufweisen, die dem Sensorelement benachbart angeordnet ist, so dass die zu dem Steg parallele Fläche im Wesentlichen parallel zu der zu dem Sensorelement parallelen Fläche ist, wobei die zu dem Steg parallele Fläche in der Draufsicht eine im Wesentlichen rechteckige Form aufweist,
wobei die magnetische Substanz in einer Magnetisierungsrichtung (M1) magnetisiert ist, die mit einer Längsrichtung der Stege identisch ist.

2. Vorrichtung nach Anspruch 1,
wobei die beiden Stege in einem Abstand (L1) voneinander angeordnet sind und der Abstand größer ist als eine Breite (W1) des Erfassungsmechanismus in einer Richtung orthogonal zu der Längsrichtung der Stege.

3. Vorrichtung nach Anspruch 1 oder 2,
wobei die beiden Stege in einer Richtung orthogonal zu der Längsrichtung der Stege symmetrisch angeordnet sind.

## Revendications

1. Dispositif d'entrée rotatif (100) comprenant :
un substrat isolant (30) ;
un élément (20) faisant office de capteur disposé sur le substrat isolant (30) ; et
une substance magnétique (10) espacée à proximité de l'élément faisant office de capteur ;
l'élément faisant office de capteur englobant un mécanisme de détection (21) configuré pour détecter des orientations des lignes d'un champ magnétique (H1) autour de l'élément faisant office de capteur et possédant une surface (20c) parallèle à l'élément faisant office de capteur, disposée face à la substance magnétique ;
la substance magnétique possédant une surface inférieure (10a) qui est disposée en position adjacente à l'élément faisant office de capteur de façon à être disposée face à la surface parallèle à l'élément faisant office de capteur ; **caractérisé en ce que** la substance magnétique englobe deux nervures (11) qui font saillie par rapport à la surface inférieure dans la direction de l'élément faisant office de capteur et s'étendent parallèlement l'une à l'autre ;
les deux nervures possédant chacune une surface parallèle à la nervure disposée en position adjacente à l'élément faisant office de capteur d'une manière telle que la surface parallèle à la nervure soit essentiellement parallèle à la surface parallèle à l'élément faisant office de capteur, la surface parallèle à la nervure possédant une configuration essentiellement rectangulaire dans une vue en plan ;
la substance magnétique étant magnétisée dans une direction de magnétisation (M1) identique à une direction longitudinale des nervures.

2. Dispositif selon la revendication 1, dans lequel les deux nervures sont disposées à une distance (L1) l'une de l'autre et la distance est supérieure à une largeur (W1) du mécanisme de détection dans une direction orthogonale par rapport à la direction longitudinale des nervures.

3. Dispositif selon la revendication 1 ou 2, dans lequel les deux nervures sont disposées de manière symétrique dans une direction orthogonale par rapport à la direction longitudinale des nervures.
